# EUROPEAN PATENT SPECIFICATION

(11) **EP 0 835 329 B1**
(45) Date of publication and mention of the grant of the patent: **26.03.2003**
(21) Application number: 95923157.2
(22) Date of filing: 29.06.1995
(51) Int. Cl.: C22C 33/02, B22F 3/10

(54) **HI-DENSITY SINTERED ALLOY AND SPHEROIDIZATION METHOD FOR PRE-ALLOYED POWDERS**
HOCHFESTE GESINTERTE LEGIERUNG UND VERFAHREN ZU DEREN HERSTELLUNG
ALLIAGE FRITTE DE DENSITE ELEVEE ET PROCEDE DE SPHEROIDISATION POUR POUDRES PRE-ALLIEES

(43) Date of publication of application: 15.04.1998
(73) Proprietor: STACKPOLE LIMITED, Mississauga, Ontario L5J 1K7 (CA)
(72) Inventor: SHIVANATH, Rohith, Toronto, Ontario M8W 4J7 (CA); JONES, Peter, Toronto, Ontario M8W 4R4 (CA); THIEN DUC THIEU, Danny, Toronto, Ontario M4L 2T7 (CA)
(74) Representative: Hitchcock, Esmond Antony
(86) International application number: CA9500395
(87) International publication number: WO97001651

(56) References cited:
- EP-A- 0 097 737
- WO-A-94/05822
- WO-A-94/14557
- WO-A-94/14991
- WO-A-95/21275
- US-A- 4 018 632
- POWDER METALL. INT., vol. 12, no. 1, pages 13-15, TRACEY, V. A.: "Effect of powder and sintering variables on the properties of a sintered 5%Ni-Mo steel."
- EDITIONS DE PHYSIQUE: CONFERENCE:POWDER METALLURGY WORLD CONGRESS (PM '94), VOL.1, PARIS, FRANCE, 6 - 9 June 1994, 7 AVENUE HOGGAR, LES ULIS, 91944, FRANCE, pages 31-34, XP000564811 COHRT ET AL.: "Material development and fitting technique for an assembled camshaft."
- DGM INFORMATIONSGESELLSCHAFT: CONFERENCE: ADVANCED MATERIALS AND PROCESSES PROCEEDINGS OF THE FIRST EUROPEAN CONFERENCE,. EUROMAT '89, VOL.1, AACHEN., pages 207-211, XP000564846 LIPP, K. ET AL.: "Development of sintered con-rods for automotive engines."

## Description

This invention relates to a method or process of forming a sintered article of powder metal having a high density and in particular relates to a process of forming a sintered article from powdered metal by use of a pre-alloyed powder as the base material and adding graphite and other additives thereto and then high temperature sintering of the article in a reducing atmosphere to produce sintered parts having a high density. In particular, this invention relates to a process of forming a sintered article of powder metal having a high density by blending graphite with a pre-alloyed iron based powder containing molybdenum followed by heat treatment to spheroidize the carbides in the microstructure to produce an article with combined high strength and toughness.

Powder metal technology is well known to the persons skilled in the art and generally comprises the formation of metal powders which are compacted and then subjected to an elevated temperature so as to produce a sintered product.

Moreover, United States Patent 2,289,569 relates generally to powder metallurgy and more particularly to a low melting point alloy powder and to the usage of the low melting point alloy powders in the formation of sintered articles.

The modulus of elasticity and toughness of conventional powder metal articles is limited by density. Conventional powder metal processes are limited to approximately 7.12 g/cc by single press, single sinter techniques. At added cost double press, double sintering can be used to increase density.

Furthermore, various processes have heretofore been designed in order to produce sintered articles having high densities. Such processes include a double press double sintering process for densities typically up to 7.5 g/cc as well as hot powder forging where virtually full densities of up to 7.8 g/cc may be obtained. However, such prior art processes are relatively expensive and time consuming. Recently developed methods include warm pressing of powders to up to 7.35 g/cc as disclosed in United States Patent 5,154,881 (Rutz). However there are process disadvantages with the warm pressing such as maintaining tool clearances with heated systems. Also warm pressing does not allow very high densities up to and above 7.5 g/cc to be easily reached in commonly used alloy systems without double pressing and double sintering.

Yet another process is disclosed in United States Patent No. 2,027,763 which relates to a process of making sintered hard metal and consists essentially of steps connected with the process in the production of hard metal. In particular, United States Patent No. 2,027,763 relates to a process of making sintered hard metal which comprises producing a spray of dry, finely powdered mixture of fusible metals and a readily fusible auxiliary metal under high pressure producing a spray of adhesive agent customary for binding hard metals under high stress, and so directing the sprays that the spray of metallic powder and the spray of adhesive liquid will meet on their way to the molds, or within the latter, whereby the mold will become filled with a compact moist mass of metallic powder and finally completing the hard metallic particle thus formed by sintering.

United States Patent No. 4,707,332 teaches a process for manufacturing structural parts from intermetallic phases capable of sintering by means of special additives which serve at the same time as sintering assists and increase the ductility of the finished structural product.

Moreover, United States Patent No. 4,464,206 relates to a wrought powder metal process for pre-alloyed powder. In particular, United States Patent No. 4,464,206 teaches a process comprising the steps of communinuting substantially non-compactable pre-alloyed metal powders so as to flatten the particles thereof heating the communinuted particles of metal powder at an elevated temperature, with the particles adhering and forming a mass during heating, crushing the mass of metal powder, compacting the crushed mass of metal powder, sintering the metal powder and hot working the metal powder into a wrought product.

Other methods to densify or increase the wear resistance of sintered iron based alloys are disclosed in United States Patent 5,151,247 which relates to a method of densifying powder metallurgical parts while United States Patent 4,885,133 relates to a process for producing wear-resistant sintered parts.

WO94/05822 discloses the formation of an article by powder metallurgy. The article is formed by blending elemental iron, carbon, ferro alloy and lubricant. The blend is pressed under a pressure of 25 to 50 tonnes/in² in a neutral or reducing atmosphere, and is sintered at a temperature of 1250° to 1350°C.

The processes as described in the prior art all have serious shortcomings in cost effectively producing the desired mechanical properties of the sintered product.

The present invention provides a process of manufacturing an article by the powder metallurgical route, comprising blending 0.8 to 2.0 wt % graphite and lubricant with a pre-alloyed iron based powder containing between 0.5 and 3.0 wt % molybdenum, the blend containing no elemental powder,
pressing the blended mixture to shape in a single compaction stage,
then high temperature sintering the pressed article in a reducing atmosphere to produce a sintered article having a density greater than 7.4 g/cc,
rapidly cooling the sintered article from the austenitic phase,
and heating the article to near the A1 temperature, to rapidly spheroidize the carbides and minimise their precipitation along the grain boundaries.

The invention provides an improved process for producing sintered articles having improved dynamic strength characteristics and an accurate method to control same.

Preferably, PM articles with high ductility can be produced by spheroidization.

Further aspects of the invention provide a blend of lubricant, graphite and pre-alloyed iron based powder containing 0.5% to 3.0% molybdenum with substantially no elemental iron, and products made generally in accordance with the method or form the blend of the present invention.

Historically, steels have been produced with carbon contents of less than 0.8%. However, ultrahigh carbon steels have been produced. Ultrahigh carbon steels are carbon steels containing between 0.8% to 2.0% carbon. The processes to produce ultra high carbon steels with fine spheroidized carbides are disclosed in United States Patent 3,951,697 as well as in the article by D.R. Lesver, C.K. Syn, A. Goldberg, J. Wadsworth and O.D. Sherby, entitled "The Case for Ultrahigh-Carbon Steels as Structural Materials" appearing in Journal of the Minerals, Metals and Materials Soc., August 1993.

Applicant has filed PCT Application No. PCT/CA94/00065 on 7 February 1994 as well as United States Application 08/193,578 on 8 February 1994 for an invention entitled "Hi-Density Sintered Alloy" concerning the process of forming sintered articles of powder metal by blending combinations of finely ground ferro alloys with iron powders to produce sintered parts in a reducing atmosphere to produce sintered parts having a high density.

These and other features of the invention will now be described with reference to preferred examples of the invention in relation to the following drawings:
Figure 1 is a % Tensile Elongation vs % Carbon graph: Wrought Steels.
Figure 2 is a modulus to density graph.
Figure 3 is a sketch of grain boundary carbides in an as sintered article.
Figure 4a is a schematic diagram of the high density powder metal process stages.
Figure 4b is a schematic diagram of another embodiment of the high density powder metal process stages.
Figure 5 is a top plan view of a connecting rod made in accordance with the invention described herein.
Figure 6 is a flow chart.
Figure 7 illustrates the eutectoid portion of the Fe-Fe₃C phase diagram.
Figure 8 is a con-rod size distribution graph: width spheroidized parts vs coined parts.

### Sintered Powder Metal Method

The invention disclosed herein utilizes high temperature sintering of 1250° to 1350°C and a reducing atmosphere of, for example hydrogen, hydrogen/nitrogen, or in vacuum. Moreover, the reducing atmosphere in combination with the high sintering temperature reduces or cleans off the surface oxides allowing the particles to form good bonds and the compacted article to develop the appropriate strength.

The lubricant is added in a manner well known to those persons skilled in the art so as to assist in the binding of the powder as well as assisting in the ejecting of the product after pressing. An example of lubricant which can be used is Zn stearate. The article is formed by pressing the mixture into shape by utilizing the appropriate pressure of, for example, 25 to 50 tonnes per square inch.

Heat treating stages may be introduced after the sintering stage. Secondary operations such as coining, resizing, machining or the like may be introduced after the sintering stage.

Furthermore, the microstructure of the finished product are improved as they exhibit:
(a) high density;
(b) well rounded pores;
(c) a homogenous structure;
(d) finely dispersed spheroidized carbides; and
(e) a product that is more similar to wrought steels in properties than conventional powder metal steels.

### Ultrahigh Carbon Steel

Typically the percentage of carbon steel lies in the range of up to 0.8% carbon. Ultrahigh carbon steels are carbon steels containing between 0.8% to 2% carbon.

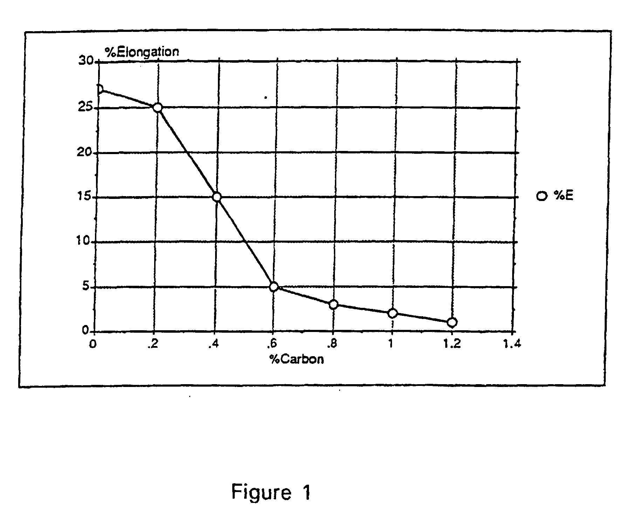

It is known that tensile ductility decreases dramatically with an increase in carbon content and accordingly ultrahigh carbon steels have historically been considered too brittle to be widely utilized. Figure 1 shows the relationship between elongation or ductility versus the carbon content of steels. It is apparent from Figure 1 that the higher the percentage of carbon, the less ductile the steel. Moreover, by reducing the carbon in steels, this also reduces its tensile strength.

However, by using the appropriate heat treatments for ultrahigh carbon steels, high ductilities as well as high strengths may be obtained.

### Ultrahigh Carbon Steel Powder Metals with Hi-Density Sintered Alloys

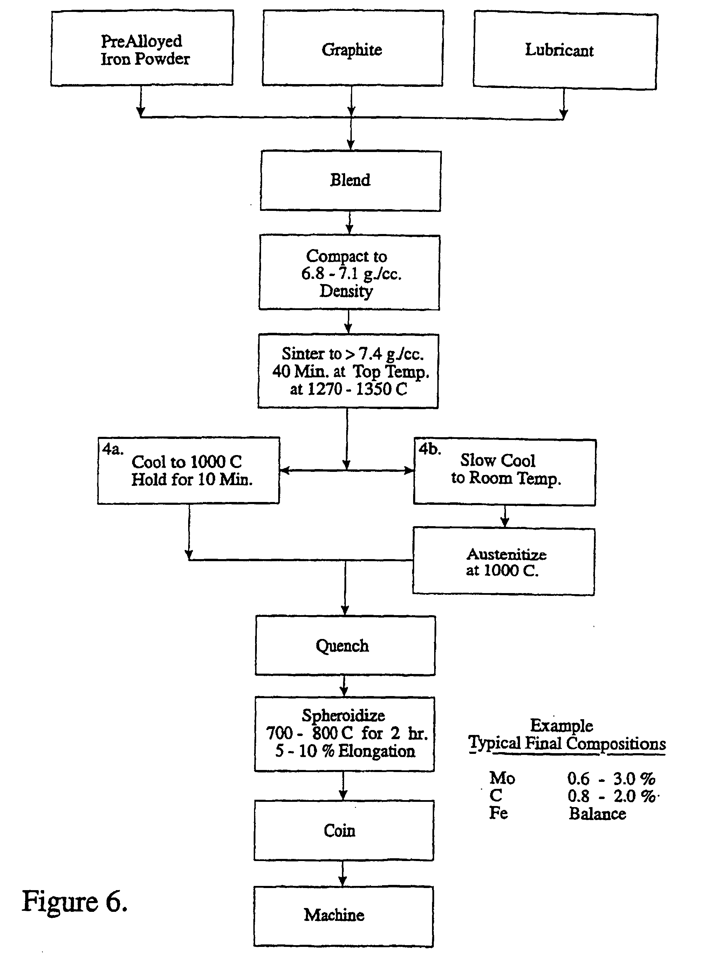

The invention described herein comprises blending graphite and lubricant with a pre-alloyed iron based powder as described herein and illustrated in Figure 6. An example of the graphite utilized herein consists of 3203 grade from Asbury but can include other grades of graphite.

Pre-alloyed powder as used herein consists of a metallic powder composed of two or more elements which are alloyed in the powder manufacturing process, and in which the particles are of the same nominal composition throughout.

The method described herein may be adapted to produce a high density grade powder metal sintered product having an ultrahigh carbon content with the following composition:

| | |
|---|---|
| Mo | 0.5 - 3.0% |
| C in the form of graphite | 0.8 to 2.0% |
| Fe and other unavoidable impurities | the remainder |

The graphite is blended with the lubricant and the pre-alloyed iron based powder containing molybdenum and is then compacted by conventional pressing methods to a minimum of 6.8 g/cc. Sintering then occurs in a vacuum, or in a vacuum under partial backfill (ie. bleed in argon or nitrogen), or pure hydrogen, or a mixture of H₂/N₂ at a temperature of 1250°C to 1350°C and in particular 1270°C to 1310°C. The vacuum typically occurs at approximately 200 microns. Moreover, the single step compaction typically occurs preferably between 6.8 g/cc to 7.1 g/cc.

It has been found that by utilizing the composition referred to above, hi-density as sintered articles greater than 7.4 g/cc can be produced in a single compression single sinter stage rather than by a double pressing, double sintering process. By utilizing the invention disclosed herein hi-density sintered articles can be produced having a sintered density of 7.4 g/cc to 7.7 g/cc.

Such hi-density sintered articles may be used for articles requiring the following characteristics, namely:
high modulus (stiffness)
high wear resistance
high tensile properties
high fatigue strength
high toughness (high impact strength)
good machinability

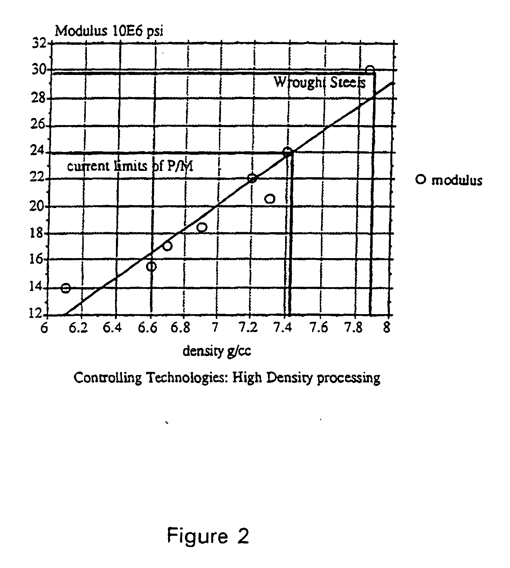

Figure 2 shows the relationship between the density of a sintered article and the modulus. It is apparent from Figure 2 that the higher the density the higher the modulus.

It should be noted that tensile strengths of approximately 100 - 120 ksi as well as impact strengths of approximately 50 foot pounds have been achieved by using the high density sintered alloy method described herein.

By adding the graphite to the pre-alloyed powder and sintering same in a vacuum or vacuum with backfill, or pure hydrogen or N₂H₂, at a temperature of 1270°C to 1350°C, a high density sintered alloy can be produced via supersolidus sintering. With respect to the composition referred to above, an alloy having a sintered density of 7.6 g/cc may be produced by single stage compaction and sintering at 1280°C to 1310°C under vacuum, or in a reducing atmosphere containing H₂/N₂.

Particularly good results have been achieved by utilizing a pre-alloyed iron based powder of iron with 0.85% molybdenum in the pre-alloyed form blended with a 1.5% graphite addition and a lubricant. More particularly a suitable commercial grade which is available in the market place is sold under the designation of QMP AT 4401 which has the following quoted physical and chemical properties:

| | |
|---|---|
| Apparent density | 2.92 g/cm³ |
| Flow | 26 seconds/50g, |

| Chemical Analysis | |
|---|---|
| C | 0.003% |
| O | 0.08% |
| S | 0.007% |
| P | 0.01% |
| Mn | 0.15% |
| Mo | 0.85% |
| Ni | 0.07% |
| Si | 0.003% |
| Cr | 0.05% |
| Cu | 0.02% |
| Fe | greater than 98% |

The commercially available pre-alloy referred to above consists of .85% molybdenum pre-alloyed with iron and unavoidable impurities. The existence of unavoidable impurities is well known to those persons skilled in the art.

Other grades of pre-alloyed powder may be employed. Graphitisation elements such as Ni and Si (other than as trace elements) are to be avoided.

### Heat Treatment - Spheroidization

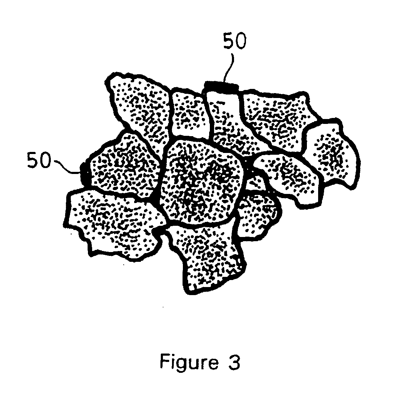

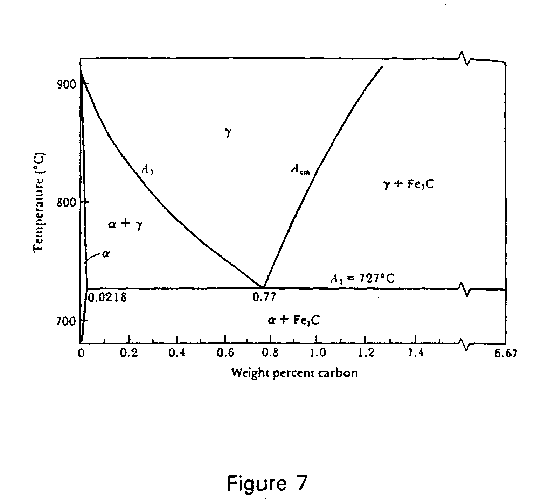

The sintered ultrahigh carbon steel article produced in accordance with the method described herein exhibits a hi-density although the article will tend to be brittle for the reasons described above. In particular, the brittleness occurs due to the grain boundary carbides 50, which are formed as shown in Figure 3. The grain boundary carbides 50 will precipitate during the austenite to ferrite transformation during cooling. It should be noted that iron has a ferrite and austenite phase. Moreover, up to 0.02% carbon can be dissolved in ferrite or (alpha) phase, and up to 2.0% in the austenite or (gamma) phase. The transition temperature between the ferrite and austenite phase is approximately 727°C as illustrated in Figure 7. Spheroidizing is any process of heating and cooling steel that produces a rounded or globular form of carbide.

Spheroidization is the process of heat treatment that changes embrittling grain boundary carbides and other angular carbides into a rounded or globular form. In prior art, the spheroidization process is time consuming and uneconomical as the carbides transform to a rounded form only very slowly. Typically, full spheroidization required long soak times at temperature. One method to speed the process is to use thermomechanical treatments, which combines mechanical working and heat to cause more rapid spheroidization. This process is not suited to high precision, net shape parts and also has cost disadvantages.

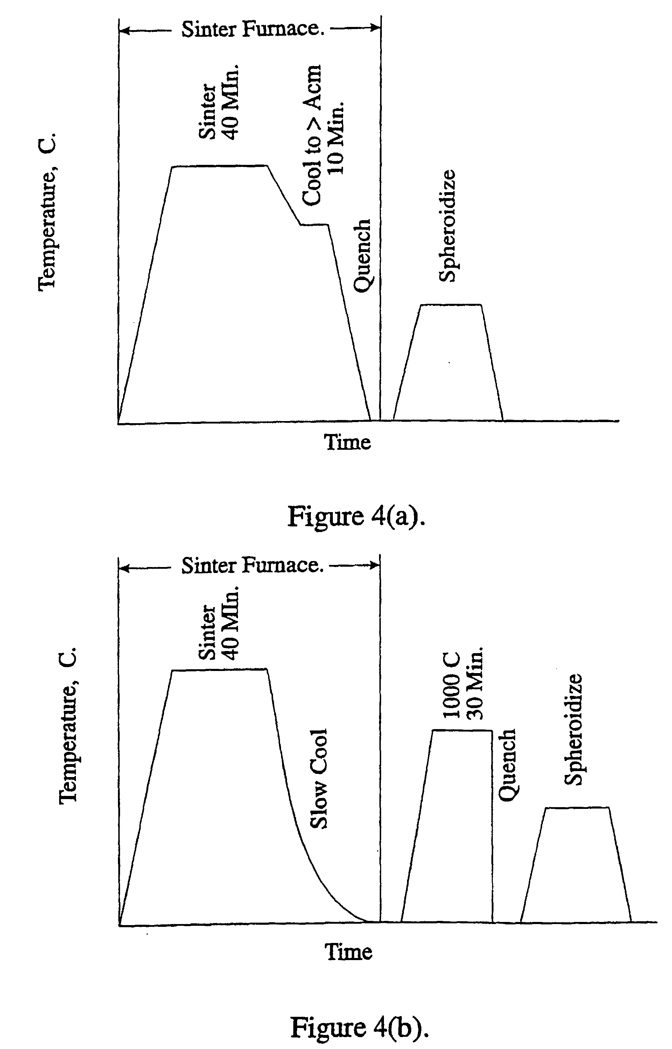

A method for spheroidization has been developed for high density sintered components whereby the parts are sintered, cooled within the sinter furnace to above the A_{CM} of approximately 1000°C and rapidly quenched to below 200°C, so that the precipitation of embrittling grain boundary carbides is prevented or minimised. This process results in the formation of a metastable microstructure consisting largely of retained austenite and martensite. A subsequent heat treatment whereby the part is raised to a temperature near the A₁ temperature (700°C to 800°C) results in relatively rapid spheroidization of carbides, and combined high strength and ductility. Figure 4a is a graph which illustrates this method for spheroidization. The process of figure 4a is also illustrated in Figure 6. The quenching which is illustrated graphically in Figure 4a may occur by oil quenching.

In another embodiment, parts are sintered as described above, in the first stage, but allowed to cool to room temperature as shown in Figure 4b. The sintered microstructure will therefore contain the embrittling carbides. The second stage is carried out on a separate heat treatment line, whereby parts are austentised at approximately 1000°C to dissolve the carbides, and oil quenched, followed by spheroidization.

Accordingly, by spheroidizing the as sintered ultrahigh carbon steel, such process gives rise to a powder metal having high ductility, typically 5-10% tensile elongation and high strength of 100-120 ksi UTS. The spheroidizing treatment causes the carbides to assume a spherical, less brittle form.

The powder metal ultrahigh carbon steel that has been spheroidized, gives rise to a hi-density P/M steel having a good balance of properties with high strength and ductility.

This ductility enables parts to be coined to maintain good dimensional accuracy. Such sintered parts may be used in the spheroidized condition or further heat treated for very high strength components.

Moreover, the ultrahigh carbon steel powder metal may also be conventionally heat treated after spheroidization, partially dissolving the spheroidized carbides, for very high strength and durability, such as:
1. austenitize matrix;
2. quench to martensite;
3. temper martensite

### Connecting Rods

Various sintered articles can be made in accordance with the invention described herein. One particularly good application of the invention described herein relates to the manufacture of automobile engine connecting rods or con rods.

Although the sintered connecting rods have heretofore been manufactured in the prior art as particularized in the article entitled "Fatigue Design of Sintered Connecting Rods" appearing in Journal of the Minerals, Metals and Materials Soc., May 1988.

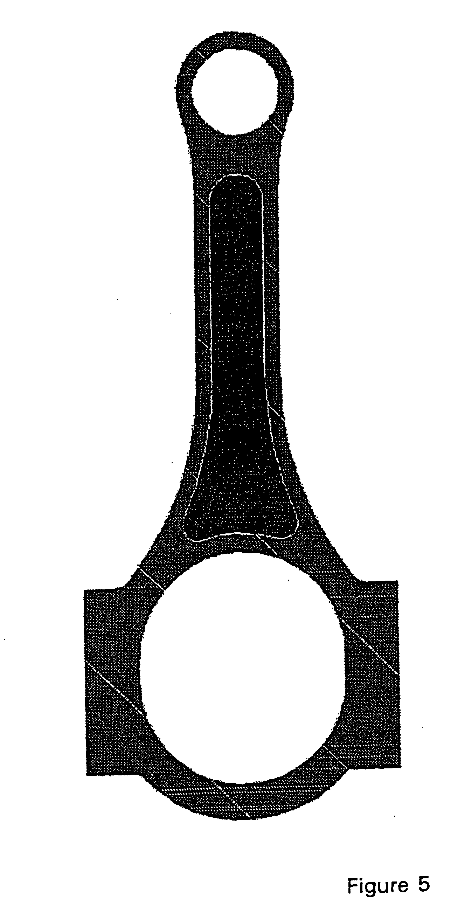

However, such prior art single press, single sintered connecting rods have not been produced on a commercial basis as these single press, single sinter rods do not have high density and modulus of elasticity. Moreover, some designs require heat treatment for high strength and are difficult to machine. Figure 5 illustrates a connecting rod.

In particular, hi-density sintered alloy connecting rods can be produced in accordance with the hi-density sintered alloy method described herein, as well as the ultra-high carbon steel as described herein.

More particularly, automobile connecting rods can be manufactured having the following compositions:

| | |
|---|---|
| Mo | 0.6% to 3.0% |
| C | 0.8% to 2.0% |
| Fe | balance |
| plus unavoidable impurities | |

Such automobile connecting rods have exhibited the following characteristics, namely:

As Spheroidized:

| | |
|---|---|
| UTS (ultimate tensile stress) | 120 ksi |
| YS (yield) | 95 ksi |
| % Elongation | 8% |
| Impact Strength | 40 ft/lbs. |
| Reverse Bending Fatigue | 40 ksi |

References to percentages herein refer to percent by weight.

In the as-spheroidized condition, components may show a certain degree of distortion. For example a sintered con-rod may have a side elevational taper from top (narrower) to bottom (wider) and variable shrinkage from part to part. Spheroidization as described herein results in sintered parts having high ductility thereby permitting the part to be precision cold coined, achieving good dimensional accuracy.

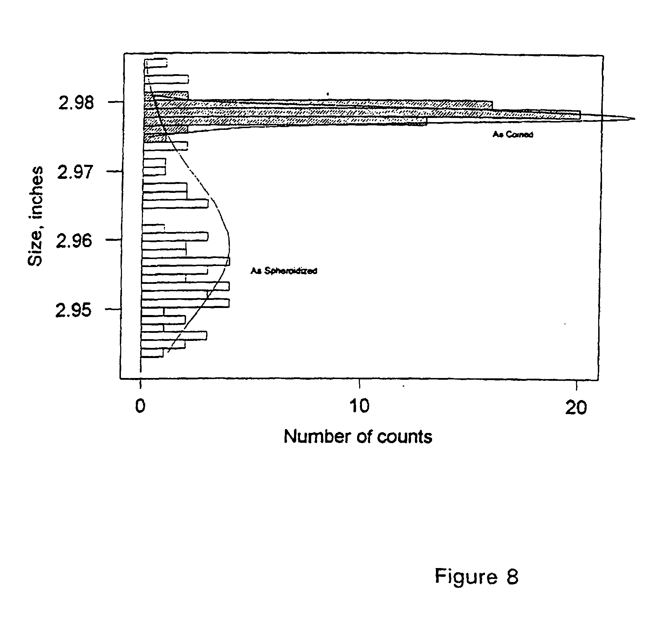

For example Figure 8 illustrates variations in dimension X of Figure 5 in the as spheroidized condition using the QMP AT 4401 composition referred to earlier with 1.5% graphite, as well as the variation after coining. In particular, Figure 8 shows an approximate variation in the as spheroidized condition of approximately 2.94 to 2.99 inches while the coined variation is approximately 2.975 to 2.98 inches.

Other products such as highly stressed transmission gears can also be made in accordance with the invention described herein.

## Claims

1. A process of manufacturing an article by the powder metallurgical route, comprising blending 0.8 to 2.0 wt % graphite and lubricant with a pre-alloyed iron based powder containing between 0.5 and 3.0 wt % molybdenum, the blend containing no elemental iron,
pressing the blended mixture to shape in a single compaction stage,
then high temperature sintering the pressed article in a reducing atmosphere to produce a sintered article having a density greater than 7.4 g/cc,
rapidly cooling the sintered article from the austenitic phase,
and heating the article to near the A₁ temperature, to rapidly spheroidize the carbides and minimise their precipitation along the grain boundaries.

2. A process according to Claim 1, wherein said reducing atmosphere is either hydrogen, hydrogen/nitrogen mixture, a vacuum or vacuum under partial backfill.

3. A process according to Claim 2, wherein said sintering is conducted at a temperature between 1250°C and 1350°C.

4. A process according to Claim 3, wherein said sintering is conducted at a temperature between 1270°C and 1310°C.

5. A process according to any one of the preceding claims, wherein said pre-alloyed iron based powder is blended with approximately 1.5% graphite and a lubricant.

6. A process according to Claim 5, wherein said blended mixture is pressed to a density of approximately 6.8 g/cc prior to sintering.

7. A process according to any one of the preceding claims, wherein the cooling and spheroidizing steps comprise:
(a) cooling said sintered article within a sintering furnace to just about the A_{CM} temperature;
(b) rapidly quenching said article to below 200°C;
(c) then raising the temperature to near the A₁ temperature so as to rapidly spheroidize said carbides.

8. A process according to any one of Claims 1 to 6, wherein the cooling and spheroidizing steps comprise:
(a) cooling said sintered article within the sintering furnace;
(b) austenitising said article in a heat treatment line at 1000°C for thirty minutes;
(c) quenching in oil;
(d) then raising the temperature to near the A₁ temperature so as to rapidly spheroidize the said article.

9. A process according to any one of the preceding claims, wherein said lubricant comprises zinc stearate.

10. A process according to any one of the preceding claims, wherein said pre-alloyed iron based powder consists essentially of 0.85% molybdenum.

## Patentansprüche

1. Verfahren zur Herstellung eines Teils nach der pulvermetallurgischen Technologie, das Folgendes umfasst: Mischen von 0,8 bis 2,0 Masse-% Graphit und Schmiermittel mit einem voriegierten Pulver auf Eisenbasis mit einem Gehalt von 0,5 bis 3,0 Masse-% Molybdän, wobei die Mischung kein elementares Eisen enthält,
Pressen der hergestellten Mischung zum Formen in einer Einfachpressstufe,
anschließendes Hochtemperatursintem des gepressten Teils in einer reduzierenden Atmosphäre zur Gewinnung eines Sinterteils mit einer Dichte von mehr als 7,4 g/cm³,
schnelles Abkühlen des Sinterteils aus der austenitischen Phase
und Erwärmen des Teils auf nahezu die Temperatur (unlesbar-Anm. d. Übers.) A₁ zur raschen Sphäroidisierung der Karbide und zur Minimierung der Abscheidung derselben entlang der Komgrenzen.

2. Verfahren nach Anspruch 1, wobei es sich bei der reduzierenden Atmosphäre entweder um Wasserstoff, ein Wasserstoff-/Stickstoffgemisch, ein Vakuum oder ein Vakuum unter teilweiser Gaszuspeisung handelt.

3. Verfahren nach Anspruch 2, wobei das Sintem bei einer Temperatur zwischen 1 250 °C und 1 350 °C erfolgt.

4. Verfahren nach Anspruch 3, wobei das Sintem bei einer Temperatur zwischen 1 270 °C und 1 310 °C erfolgt.

5. Verfahren nach einem der vorstehenden Ansprüche, wobei das vorlegierte Pulver auf Eisenbasis mit etwa 1,5 % Graphit und einem Schmiermittel gemischt wird.

6. Verfahren nach Anspruch 5, wobei die hergestellte Mischung vor dem Sintem auf eine Dichte von etwa 6,8 g/cm^{a} gepresst wird.

7. Verfahren nach einem der vorstehenden Ansprüche, wobei die Abkühl- und Sphäroidisierungsschritte Folgendes umfassen:
(a) Abkühlen des Sinterteils in einem Sinterofen auf nahezu die Temperatur A_{CM}.
(b) rasches Abschrecken des Teils auf unter 200 °C,
(c) anschließendes Anheben der Temperatur auf nahezu die Temperatur A₁ zur schnellen Sphäroidisierung der Karbide.

8. Verfahren nach einem der Ansprüche 1 bis 6, wobei die Abkühlungs- und Sphäroidisierungsschritte Folgendes umfassen:
(a) Abkühlen des Sinterteils im Sinterofen,
(b) Austenitisierung des Teils auf einer Wärmebehandlungslinie über einen Zeitraum von 30 Minuten bei 1 000 °C,
(c) Abschrecken in Öl,
(d) anschließendes Anheben der Temperatur auf nahezu die Temperatur A₁ zur schnellen Sphäroidisierung des Teils.

9. Verfahren nach einem der vorstehenden Ansprüche, wobei als Schmiermittel Zinkstearat vorgesehen ist.

10. Verfahren nach einem der vorstehenden Ansprüche, wobei das vorlegierte Pulver auf Eisenbasis in der Regel einen Molybdängehalt von 0.85 % aufweist.

## Revendications

1. Procédé pour fabriquer un article par la voie de la métallurgie des poudres, comprenant
le mélangeage de 0,8 à 2,0 % de graphite et d'un lubrifiant avec une poudre à base de fer préallié contenant entre 0,5 et 3,0 % en poids de molybdène, le mélange ne contenant pas de fer élémentaire,
la compression du mélange pour mettre en forme en une seule étape de compactage,
puis le frittage à température élevée de l'article compressé dans une atmosphère réductrice pour produire un article fritté ayant une densité supérieure à 7,4 g/cc,
le refroidissement rapide de l'article fritté à partir de la phase austénite,
et le chauffage de l'article à une température proche de la température A₁, pour sphéroïdiser rapidement les carbures et minimiser leur précipitation le long des joints de grains.

2. Procédé selon la revendication 1, dans lequel ladite atmosphère réductrice est l'hydrogène, un mélange hydrogène/azote, le vide, ou un vide avec remplissage partiel.

3. Procédé selon la revendication 2, dans lequel ledit frittage est effectué à une température entre 1250°C et 1350°C.

4. Procédé selon la revendication 3, dans lequel ledit frittage est effectué à une température entre 1270°C et 1310°C.

5. Procédé selon l'une quelconque des revendications précédentes, dans lequel la poudre à base de fer préallié est mélangée avec environ 1,5 % de graphite et un lubrifiant.

6. Procédé selon la revendication 5, dans lequel ledit mélange est compressé à une densité d'environ 6,8 g/cc avant le frittage.

7. Procédé selon l'une quelconque des revendications précédentes, dans lequel les étapes de refroidissement et de sphéroïdisation comprennent :
(a) le refroidissement dudit article fritté dans un four de frittage juste à environ la température A_{CM} ;
(b) une trempe rapide dudit article en-dessous de 200°C ;
(c) puis l'élévation de la température jusqu'à près de la température A₁ pour sphéroïdiser rapidement lesdits carbures.

8. Procédé selon l'une quelconque des revendications 1 à 6, dans lequel les étapes de refroidissement et de sphéroïdisation comprennent :
(a) le refroidissement dudit article fritté dans un four de frittage ;
(b) l'austénitisation dudit article dans une unité de traitement thermique à 1000°C pendant 30 minutes ;
(c) une trempe dans l'huile ;
(d) puis l'élévation de la température jusqu'à près de la température A₁ pour sphéroïdiser rapidement ledit article.

9. Procédé selon l'une quelconque des revendications précédentes, dans lequel ledit lubrifiant comprend du stéarate de zinc.

10. Procédé selon l'une quelconque des revendications précédentes, dans lequel ladite poudre à base de fer préallié contient essentiellement 0,85% de molybdène.
